# FASCICULE DE BREVET EUROPEEN

(11) **EP 0 555 767 B1**
(45) Date de publication et mention de la délivrance du brevet: **12.04.1995**
(21) Numéro de dépôt: 93101716.4
(22) Date de dépôt: 04.02.1993
(51) Int. Cl.: A47J 43/12

(54) **Recipient contenant du lait adapté à un accessoire pour cappuccino**
Milchbehälter für ein Zusatzgerät zum Bereiten von Cappuccino
Milk containing vessel adapted to a device for making cappuccino

(30) Priorité: 10.02.1992 FR 9201444
(43) Date de publication de la demande: 18.08.1993
(73) Titulaire: MOULINEX S.A., F-93170 Bagnolet (FR)
(72) Inventeur: Schiettecatte, Patrice Jean Cornelius, F-61000 Alençon (FR); Paquay, Justinus Theresia Agnes Catharina, F-61000 Alençon (FR)
(74) Mandataire: May, Hans Ulrich, Dr.

(56) Documents cités:
- EP-A- 0 195 750
- EP-A- 0 344 859
- DE-A- 4 035 270

## Description

L'invention concerne un accessoire s'adaptant à l'extrémité d'une tige de sortie de vapeur d'une machine à café espresso et permettant d'effectuer une émulsion crémeuse air-lait-vapeur nécessaire à la préparation d'un "cappuccino" à l'italienne. L'accessoire comprend une chambre d'aspiration en liaison avec la tige de sortie de vapeur, une première ouverture latérale qui communique avec un récipient contenant du lait, une deuxième ouverture en communication avec l'atmosphère, et une troisième ouverture par laquelle sort un premier mélange qui s'écoule dans une chambre d'émulsion comportant un premier moyen d'écoulement par lequel s'échappe ladite émulsion crémeuse.

Un tel accessoire pour cappuccino est connu du document EP-A-344 859. D'après ce document, l'accessoire est constitué de plusieurs pièces rigides reliées entre elles par des joints, de moyens anti-projections et de moyens d'acheminement air-lait-vapeur complexes, et est rélié au récipient contenant le lait par un tuyau flexible. Ce tuyau a une première extrémité qui est solidaire de la première ouverture latérale de l'accessoire, et son autre extrémité qui est plongée dans le récipient de manière à toujours être immergée. Un tel tuyau est encombrant, difficile à monter et à démonter et mal adapté pour des récipients à emballage opaque. D'autre part, il est indispensable d'utiliser un matériau souple pour le tuyau et l'utilisation d'un tel tuyau n'optimise pas l'émulsion crémeuse nécessaire à l'obtention d'un bon cappuccino.

On connaît également, par le document DE-A-4 035 270, un dispositif pour émulsionner du lait en vue de préparer un cappuccino, du type comportant un récipient contenant le lait dont l'émulsion est réalisée au sein même du récipient par un jet de vapeur aspirant et entraînant, par effet venturi, l'air issu d'un conduit agencé dans le récipient. Ce dispositif est d'une utilisation relativement compliquée et nécessite des précautions sur la quantité de lait à verser dans le récipient.

Le but de l'invention est de remédier aux inconvénients précités en réalisant un accessoire à cappuccino, facile à mettre en place, économique et simple d'utilisation.

Selon l'invention, un accessoire pour la préparation d'un cappuccino, du type exposé ci-dessus, est plus particulièrement caractérisé en ce que le répicient contenant le lait étant solidaire de l'accessoire en étant positionné latéralement par rapport à celui-ci, le fond du récipient est relié par une canalisation à la première ouverture latérale de l'accessoire.

Grâce à l'accessoire selon l'invention, un utilisateur peut obtenir une émulsion crémeuse air-lait-vapeur avec un seul outil ce qui facilite l'opération. D'autre part, le récipient étant accolé à l'accessoire, la hauteur du niveau de lait varie moins lors du fonctionnement de l'accessoire, ce qui améliore la qualité de l'émulsion crémeuse. Enfin, la liaison directe du récipient sur l'accessoire limite les connexions et le cheminement du lait dans la canalisation, facilitant ainsi le nettoyage et augmentant l'hygiène dudit accessoire.

Les caractéristiques et avantages de l'invention ressortiront d'ailleurs de la description qui va suivre, à titre d'exemple non limitatif, en référence aux dessins annexés dans lesquels :

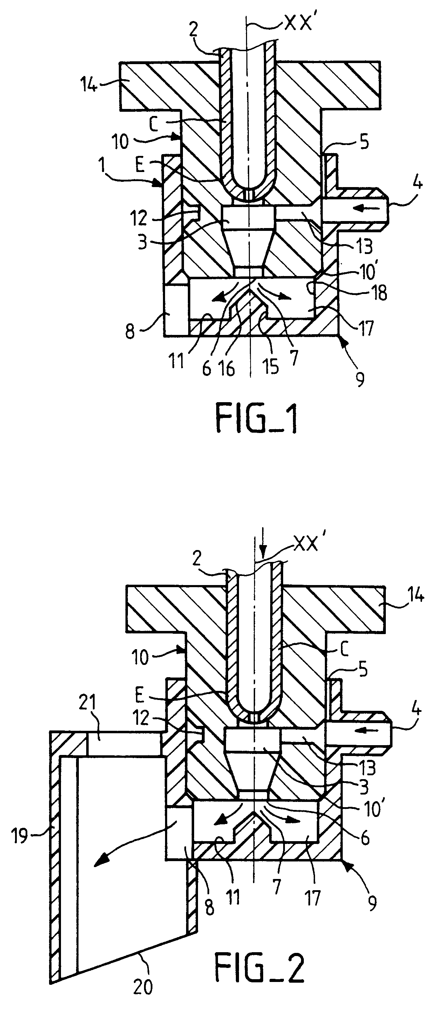

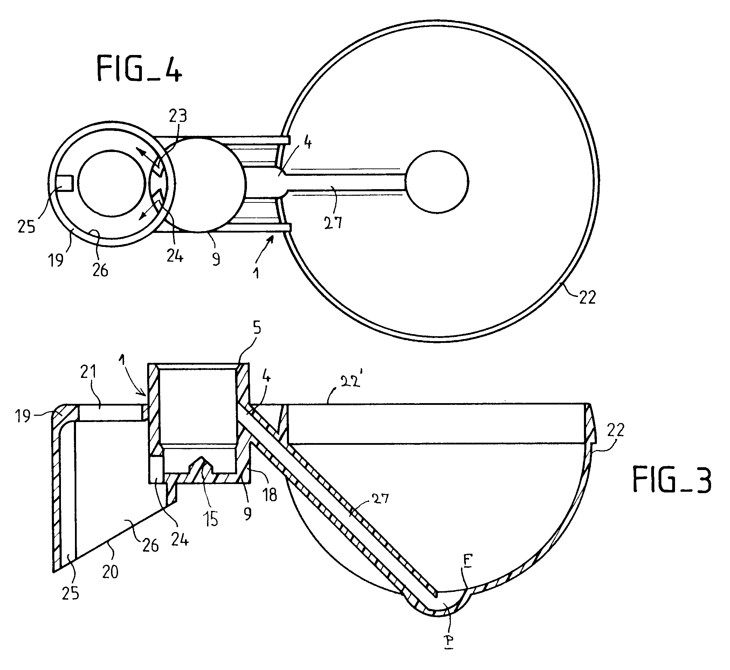

la figure 1 est une coupe verticale d'un accessoire à cappuccino constitué d'une pièce rigide et d'une pièce souple selon un premier mode de réalisation ; la figure 2 est une coupe verticale d'un accessoire à cappuccino selon un deuxième mode de réalisation ; la figure 3 est une coupe verticale d'une pièce rigide d'un accessoire à cappuccino conformément à l'invention ; la figure 4 est une vue de dessous de l'accessoire de la figure 3.

Les figures 1 et 2 se rapportent à un accessoire qui a déjà été décrit dans la demande EP-A-555 766 déposée par la demanderesse et qui est de nouveau décrit dans la présente demande afin de mieux faire comprendre l'invention.

Selon la figure 1, un accessoire 1 pour la préparation d'une émulsion crémeuse air-lait-vapeur pour confectionner un "cappuccino" est monté à l'extrémité d'une tige de sortie de vapeur 2 d'une machine à café espresso non représentée. L'accessoire 1 comprend une chambre d'aspiration 3 qui est en liaison avec : la tige de sortie de vapeur 2, une première ouverture latérale 4 par laquelle est injectée le lait dans l'accessoire, une deuxième ouverture 5 en communication avec l'atmosphère, et une troisième ouverture 6 par laquelle sort un premier mélange air-lait-vapeur qui s'écoule dans une chambre d'émulsion 7 comportant un premier moyen d'écoulement 8 par lequel s'échappe l'émulsion crémeuse. L'accessoire 1 comporte une première pièce tubulaire rigide 9 présentant la première ouverture 4 et le premier moyen d'écoulement 8 et recevant partiellement une deuxième pièce tubulaire souple 10 réalisée en un matériau élastique et reliée en son extrémité supérieure à la tige de sortie de vapeur 2. La deuxième pièce tubulaire souple 10 comprend la chambre d'aspiration 3 en liaison avec la première ouverture 4 et la deuxième ouverture 5. L'espace laissé entre l'extrémité inférieure de la deuxième pièce tubulaire souple 10 et la base 11 de la première pièce tubulaire rigide 9 forme la chambre d'émulsion 7.

La tige de sortie de vapeur 2 de la machine à café espresso est enfoncée dans un logement C, réalisé dans la partie centrale de la deuxième pièce 10, pour venir en butée contre un premier épaulement E de manière à ne pas obturer la liaison de la chambre 3 avec la première ouverture latérale 4 par laquelle est amenée le mélange air-lait.

La paroi interne 18 de la pièce rigide 9 comporte un épaulement 10' sur lequel vient en butée l'extrémité de la pièce souple 10. De cette manière, la première pièce tubulaire rigide 9 assure un autoserrage sur la deuxième pièce tubulaire souple 10 de façon à garantir une bonne étanchéité entre les différentes ouvertures. La deuxième pièce tubulaire souple 10 comporte également une gorge circulaire 12 creusée dans sa surface latérale, et dans laquelle débouche un trou 13, par exemple, perpendiculaire à un axe longitudinal XX' de ladite deuxième pièce tubulaire souple 10, ladite gorge 12 étant refermée par la paroi interne 18 de la paroi rigide 9 met en liaison la chambre d'aspiration 3 avec la première ouverture 4. Après encastrement complet de la deuxième pièce tubulaire souple 10 dans la première pièce tubulaire rigide 9, la gorge circulaire 12 se trouve placé automatiquement, en vis à vis de la première ouverture 4 communiquant avec le récipient contenant du lait. Pour obtenir une réalisation économique mais fiable, la première pièce tubulaire rigide 9 est, par exemple, en polyacétal et la deuxième pièce tubulaire souple 10 est, par exemple, en silicone. Tout autre matériau souple ou rigide ou résistant à la chaleur peut également être utilisé.

Dans l'exemple de réalisation décrit à la figure 1, la deuxième ouverture 5 servant de prise d'air est, par exemple, formée par un sillon calibré de section comprise entre 0,1 et 0,3mm², pratiqué dans la paroi interne latérale 18 de la première pièce tubulaire rigide 9 et interrompant la surface de contact entre les deux pièces 9 et 10.

La deuxième ouverture 5 d'admission d'air peut, dans un autre exemple de réalisation non représenté, être réalisé dans la deuxième pièce tubulaire 10.

L'extrémité supérieure de la deuxième pièce tubulaire souple 10 comporte un moyen de préhension, par exemple, une protubérance annulaire 14 réalisée à la périphérie extérieure de l'extrémité supérieure de la deuxième pièce 10. Ce moyen de préhension facilite le montage et le démontage de l'accessoire ainsi formé. La base 11 de la première pièce tubulaire-rigide 9 comporte un bossage 15 situé en regard de l'ouverture 6 et présentant au moins une arrête vive, par exemple une pointe conique 16. Ce bossage est suivi d'une zone d'accumulation 17 du mélange crémeux qui s'écoule par le premier moyen d'écoulement 8 constitué d'au moins un trou pratiqué dans la paroi latérale 18. L'accessoire ainsi décrit est monté sur la tige de sortie de vapeur 2 d'une machine à café espresso et peut fonctionner dès que le robinet de vapeur de la machine est ouvert. De cette manière la vapeur jaillissant de la tige 2 aspire et entraîne, par effet venturi, l'air issu de la deuxième ouverture 5 et le lait issu de la première ouverture 4 qui communique avec un récipient contenant du lait. Un premier mélange air-lait-vapeur se forme dans la chambre d'aspiration 3. La chambre d'aspiration 3 a, par exemple, une forme tronconique inversée de manière, d'une part, à canaliser le premier mélange sur le bossage 15 de la pièce rigide 10, et d'autre part, à favoriser l'aspiration dans ladite chambre. Ledit premier mélange est projeté dans la chambre d'émulsion 7 sur la pointe de cône 16 de la base 11 de la première pièce tubulaire rigide 9. De ce fait, le jet du premier mélange est brisé et éclaté en une multitude de gouttelettes formant un nouveau jet mince et de surface large. Ce nouveau jet vient frapper la base 11 et la paroi latérale 18 de la première pièce tubulaire rigide 9 et se brasse fortement avec une partie du mélange encore retenu dans la zone d'accumulation 17 de façon à créer une bonne émulsion. De cette manière un mélange crémeux composé d'une mousse fine et abondante s'écoule par le premier moyen d'écoulement 8.

Selon la figure 2 dont certaines références désignent les mêmes éléments que ceux représentés sur la figure 1 l'accessoire 1 pour la préparation d'un mélange crémeux comporte au moins un moyen anti-éclaboussure 19 positionné à la sortie du premier moyen d'écoulement 8. Dans un autre exemple de réalisation non représenté, deux moyens anti-éclaboussures sont fixés sur la pièce rigide 9 et permettent d'obtenir ainsi un répartiteur deux tasses. Dans l'exemple de réalisation non représenté, le moyen anti-éclaboussure 19 est, par exemple, une chambre cylindrique solidaire de la première pièce tubulaire rigide 9. Ladite chambre 19 comporte un orifice d'évacuation de mousse 20 par lequel s'échappe l'émulsion crémeuse nécessaire au cappuccino et positionné, par exemple, dans la partie inférieure de ladite chambre 19 ainsi qu'un trou d'évacuation d'excès de vapeur 21 positionné, par exemple, dans sa partie supérieure. La partie inférieur de l'orifice d'évacuation 20 a, par exemple, une forme biseautée afin de favoriser le bon écoulement de l'émulsion crémeuse en un seul endroit.

L'invention décrite dans les figures 3 et 4 reprend certaines références pour désigner les mêmes éléments que ceux représentés à la figure 1. L'accessoire 1 pour la préparation d'une émulsion crémeuse comporte latéralement un récipient 22 destiné à contenir du lait et dont le fond F est relié par une canalisation 27 à la première ouverture latérale 4. Le fond F du récipient 22 comporte par exemple, une dépression formant un point bas P dans laquelle est connectée la canalisation 27. De cette manière, lors du fonctionnement de l'accessoire avec le récipient juxtaposé contenant du lait, toute aspiration d'air et donc de désamorçage est évitée. Le récipient 22 a, par exemple, une faible capacité, mais néanmoins suffisante pour obtenir au moins une vraie tasse de cappuccino. Le récipient 22 en forme de bol est réalisé, par exemple, par moulage en une seule pièce avec la première pièce tubulaire rigide 9, le moulage est de préférence réalisé à base d'une matière plastique rigide. Dans un autre mode de réalisation non représenté, et afin de réduire l'encombrement et faciliter le nettoyage, le récipient 22 peut être attaché à la première pièce tubulaire rigide 9 par un moyen de fixation tel que, par exemple, un crochet, un clipsage ou une baïonnette. Afin d'amorcer plus facilement le pompage du lait à travers la canalisation oblique 27, le bord supérieur 22' est pratiquement situé au même niveau que la première ouverture 4, de sorte que, lorsque l'utilisateur remplit de lait le récipient, il suffit d'une très faible aspiration dans la chambre 3 pour amorcer le soutirage du lait, ce qui est très utile en début d'opération lorsque le jet de vapeur issu de la tige 2 est très faible.

La première pièce tubulaire rigide 9 comporte, par exemple, deux trous latéraux 23 et 24 servant de moyen d'écoulement et orientés selon une direction tangentielle à la paroi interne latérale 26 de la chambre 19. La chambre 19 comporte un plot transversal 25 positionné à l'intérieur de la paroi latérale 26 de la chambre 19, s'étendant sensiblement sur toute la hauteur de la chambre 19 et placé à l'opposé des trous latéraux 23 et 24. Ainsi, le mélange crémeux air-lait-vapeur issu des trous obliques 23 et 24 suit un mouvement circulaire représenté par les flèches sur la figure 3, et vient heurter le plot 25. Ledit mélange crémeux s'écoule le long du plot 25 et est ainsi récupéré dans une tasse ou tout autre récipient sans éclaboussures.

En conséquence, le mouvement imposé au mélange crémeux favorise la séparation de la vapeur de l'émulsion crémeuse.

## Revendications

1. Accessoire pour la préparation d'une émulsion crémeuse air-lait-vapeur pour confectionner un cappuccino, destiné à être monté sur l'extrémité d'une tige de sortie de vapeur (2) d'une machine à café espresso et comprenant une chambre d'aspiration (3) en liaison avec la tige de sortie de vapeur (2), une première ouverture latérale (4) qui communique avec un récipient (22) contenant du lait, une deuxième ouverture latérale (5) en communication avec l'atmosphère, et une troisième ouverture (6) par laquelle sort un premier mélange qui s'écoule dans une chambre d'émulsion (7) comportant un premier moyen d'écoulement (8) par lequel s'échappe ladite émulsion crémeuse,
**caractérisé en ce que** le récipient (22) contenant le lait étant solidaire de l'accessoire en étant positionné latéralement par rapport à celui-ci, le fond (F) du récipient (22) est relié par une canalisation (27) à la première ouverture latérale (4) de l'accessoire.

2. Accessoire pour la préparation d'une émulsion crémeuse, selon la revendication 1,
**caractérisé en ce que** le fond (F) du récipient (22) comporte une dépression formant un point bas (P) dans laquelle est connectée la canalisation (27).

3. Accessoire pour la préparation d'une émulsion crémeuse, selon la revendication 1 ou 2,
**caractérisé en ce que** le récipient (22) contenant le lait est solidaire d'une première pièce tubulaire rigide (9) présentant la première ouverture latérale (4) et dans laquelle est emboîtée partiellement une deuxième pièce tubulaire souple (10), la première pièce tubulaire rigide (9) et la deuxième pièce tubulaire souple (10) formant l'accessoire.

4. Accessoire pour la préparation d'une émulsion crémeuse, selon la revendication 3,
**caractérisé en ce que** la première pièce rigide (9) et le récipient (22) sont moulés en une seule pièce.

## Claims

1. Accessory for the preparation of a creamy air/milk/steam emulsion for making a cappuccino, to be fitted to the end of a steam outlet nozzle (2) of an espresso coffee machine and comprising a suction chamber (3) connected to the steam outlet nozzle (2), a first lateral opening (4) which communicates with a receptacle containing milk, a second opening (5) communicating with the atmosphere, and a third opening (6) through which a first mixture emerges and flows into an emulsion chamber (7) which has a first flow means (8) through which the said creamy emulsion escapes, characterised in that, the receptacle (22) containing the milk being fixed to the accessory whilst being positioned laterally with respect to the latter, the bottom (F) of the receptacle (22) is connected by piping (27) to the first lateral opening (4) of the accessory.

2. Accessory for the preparation of a creamy emulsion, according to Claim 1, characterised in that the bottom (F) of the receptacle (22) has a depression forming a low point (P) into which the piping (27) is connected.

3. Accessory for the preparation of a creamy emulsion, according to Claim 1 or 2, characterised in that the receptacle (22) containing the milk is fixed to a first, rigid, tubular piece (9) having the first lateral opening (4) and in which is partially fitted a second, flexible, tubular piece (10), the first, rigid, tubular piece (9) and the second, flexible, tubular piece (10) forming the accessory.

4. Accessory for the preparation of a creamy emulsion, according to Claim 3, characterised in that the first, rigid piece (9) and the receptacle (22) are moulded in a single piece.

## Patentansprüche

1. Zusatzgerät für die Herstellung einer cremigen Emulsion Luft-Milch-Dampf zur Zubereitung eines Cappuccino, das zum Anbringen an einem Ende einer rohrförmigen Dampfaustrittsdüse (2) einer Espresso-Kaffeemaschine bestimmt ist und eine Ansaugkammer (3), die in Verbindung mit der Dampfaustrittsdüse (2) steht, eine erste seitliche Öffnung (4), die mit einem Milch enthaltenden Gefäß (22) in Verbindung steht, eine zweite seitliche Öffnung (5), die mit der Atmosphäre in Verbindung steht, und eine dritte Öffnung (6) aufweist, durch welche ein erstes Gemisch austritt, das in eine Emulsionskammer (7) strömt, die eine erste Ausflußvorrichtung (8) aufweist, durch welche die cremige Emulsion abläuft, **dadurch gekennzeichnet,** daß das Milch enthaltende Gefäß (22) mit dem Zusatzgerät in einer Lage seitlich zu diesem fest verbunden ist und der Boden (F) des Gefäßes (22) durch eine Leitung (27) mit der ersten seitlichen Öffnung (4) des Zusatzgeräts verbunden ist.

2. Zusatzgerät für die Herstellung einer cremigen Emulsion nach Anspruch 1, **dadurch gekennzeichnet,** daß der Boden (F) des Gefäßes (22) eine Vertiefung aufweist, die einen Tiefpunkt (P) bildet, an dem die Leitung (27) angeschlossen ist.

3. Zusatzgerät für die Herstellung einer cremigen Emulsion nach Anspruch 1 oder 2, **dadurch gekennzeichnet,** daß das Milch enthaltende Gefäß (22) fest verbunden ist mit einem starren ersten rohrförmigen Teil (9), der die erste seitliche Öffnung (4) aufweist und in den teilweise ein elastischer zweiter rohrförmiger Teil (10) eingesetzt ist, wobei der starre erste rohrförmige Teil (9) und der elastische zweite rohrförmige Teil (10) das Zusatzgerät bilden.

4. Zusatzgerät für die Herstellung einer cremigen Emulsion nach Anspruch 3, **dadurch gekennzeichnet,** daß der starre erste Teil (9) und das Gefäß (22) einstückig geformt sind.
